# EUROPÄISCHE PATENTANMELDUNG

(11) **EP 3 537 127 A1**
(43) Veröffentlichungstag der Anmeldung: **11.09.2019**
(21) Anmeldenummer: 18160128.7
(22) Anmeldetag: 06.03.2018
(51) Int. Cl.: G01L 5/14

(54) **VERFAHREN ZUM BESTIMMEN EINER EINBAUTIEFE EINES AUFNEHMERS IN EINEM PRÜFKÖRPER**

(71) Anmelder: Kistler Holding AG, 8408 Winterthur (CH)
(72) Erfinder: Laffranchi, Marco, 8408 Winterthur (CH); Schenkel, Philipp, 8408 Winterthur (CH); Rosa, Flavio, 5400 Baden (CH)

(57) **Zusammenfassung**

Die Erfindung betrifft ein Verfahren zum Bestimmen einer Einbautiefe (58) eines Aufnehmers (4) in einem Prüfkörper (2); welcher Prüfkörper (2) eine Längsbohrung (21) aufweist, welche Längsbohrung (21) in einer radialer Richtung von einer Innenwand (28) begrenzt ist; in welcher Längsbohrung (21) eine physikalische Messgrösse herrscht; welcher Prüfkörper (2) eine Radialbohrung (22) aufweist, welche Radialbohrung (22) bis zur Längsbohrung (21) reicht; welcher Aufnehmer (4) in die Radialbohrung (22) einbaubar ist; welche physikalische Messgrösse vom eingebauten Aufnehmer (4) messbar ist; welche Radialbohrung (22) eine Radialschulter (24) aufweist; und welcher Aufnehmer (4) eine Dichtschulter (44) aufweist, mit welcher Dichtschulter (44) der eingebaute Aufnehmer (4) direkt oder indirekt auf der Radialschulter (24) aufliegt; **dadurch gekennzeichnet, dass** eine Kerntiefe (26) ermittelt wird, welche Kerntiefe (26) eine kürzeste radiale Entfernung zwischen der Radialschulter (24) und der Innenwand (28) ist; dass eine Fronttiefe (46) ermittelt wird, welche Fronttiefe (46) eine kürzeste radiale Entfernung zwischen der Dichtschulter (44) und einer Stirnfläche (48) des Aufnehmers (4) ist; und dass der Aufnehmer (4) so in die Radialbohrung (22) eingebaut wird, dass die Stirnfläche (48) des eingebauten Aufnehmers (4) in gleicher Einbautiefe (58) mit der Innenwand (28) liegt.

## Beschreibung

### Technisches Gebiet

Die Erfindung betrifft ein Verfahren zum Bestimmen einer Einbautiefe eines Aufnehmers in einem Prüfkörper nach dem Oberbegriff des unabhängigen Anspruchs.

### Stand der Technik

Der Prüfkörper ist beispielsweise ein Prüfkörper zum Verschiessen von Munition wie er von der Ständigen Internationalen Kommission für die Prüfung von Handfeuerwaffen (CIP) vorgeschrieben wird. In diesem Beispiel wird beim Verschiessen von Munition ein im Prüfkörper auftretender Druck gemessen.

Dazu beschreibt CH576133A5 einen Aufnehmer zum Messen des in einem solchen Prüfkörper auftretenden Druckes. Der Aufnehmer wird in den Prüfkörper eingebaut. Der Aufnehmer weist ein Gehäuse auf. Über das Gehäuse wird der Aufnehmer mechanisch mit dem Prüfkörper verbunden. Der zu messende Druck ist dynamisch, er verändert sich zeitlich sehr rasch. Solch ein dynamischer Druck kann von einem piezoelektrischen Element mit Messfrequenzen von bis zu 100kHz zeitlich aufgelöst werden. Das piezoelektrische Element ist im Inneren des Gehäuses angeordnet. Am Gehäuse ist ein Druckübertragungselement angeordnet. Der zu messende Druck wird durch eine Aussenwand der Munition als Normalkraft über das Druckübertragungselement auf das piezoelektrische Element übertragen. Unter der Wirkung der Normalkraft erzeugt das piezoelektrische Element ein dem zu messenden Druck proportionales elektrisches Ausgangssignal. Das Ausgangssignal kann signalverarbeitet werden. Ein zeitlicher Verlauf des signalverarbeiteten Ausgangssignals kann dargestellt werden.

Nach CH576133A5 weist der Prüfkörper eine Längsbohrung auf. Beim Verschiessen der Munition wird die Munition in der Längsbohrung geführt. In Radialrichtung wird der Prüfkörper von einem Mantel begrenzt. Im Mantel ist eine durchgehende Radialbohrung zum Einbau des Aufnehmers vorgesehen. Der Aufnehmer wird über ein Aussengewinde des Gehäuses, welches passend zu einem Innengewinde der Radialbohrung ist, in die Radialbohrung geschraubt. Der Aufnehmer wird soweit in die Radialbohrung geschraubt, bis eine Dichtschulter des Aufnehmers mechanisch mit einer Dichtscheibe verbunden ist. Die Dichtscheibe wiederum liegt auf einer Ringschulter der Radialbohrung auf. Über die Dichtscheibe wird der Einbau des Aufnehmers in den Prüfkörper abgedichtet. Das Druckübertragungselement des eingeschraubten Aufnehmers reicht bis zur Längsbohrung. Eine druckaufnehmende Stirnfläche des Druckübertragungselementes wird in einer solchen Einbautiefe in der Radialbohrung angeordnet, dass Stirnfläche und Innenwand miteinander fluchten. Die Fluchtung von Stirnwand und Innenwand wird optisch kontrolliert. Über unterschiedlich hohe Dichtscheiben wird die Einbautiefe des Aufnehmers eingestellt.

Nun haben kleine Abweichungen in der Genauigkeit der Fluchtung einen grossen Einfluss auf eine Lebensdauer und eine Messqualität des Aufnehmers. Wenn das Druckübertragungselement nur um 0.1mm in die Längsbohrung ragt, kann der Aufnehmer beim Prüfen der Munition durch die verschossene Munition beschädigt werden, was die Lebensdauer des Aufnehmers einschränkt. Wenn das Druckübertragungselement nicht fluchtend in der Radialbohrung nur um 0.25mm zurückversetzt ist, muss die Aussenwand der Munition stärker verformt werden, um das Druckübertragungselement zu berühren und um den zu messenden Druck zu übertragen, was die Normalkraft verändert und das Ausgangssignal verfälscht und die Messqualität verschlechtert. Die CIP schreibt dann auch für einen Prüfkörper zum Verschiessen von Munition einen maximal zulässigen Rückversatz von 0.25mm vor. Und wenn das Druckübertragungselement nicht fluchtend in der Radialbohrung gar um mehr als 0.5mm zurückversetzt ist, kann der Aufnehmer durch Druckwellen zu Schwingungen angeregt werden, welche Schwingungen auf das piezoelektrische Element wirken und das Ausgangssignal verfälschen und die Messqualität verschlechtern.

Um die Fluchtung möglichst genau einstellen zu können, ist daher eine grosse Anzahl unterschiedlich hoher Dichtscheiben notwendig oder mehrere Dichtscheiben werden zu einem Paket übereinander gelegt. Zum Einstellen der Fluchtung werden Dichtscheiben so lange durch andere Dichtscheiben ersetzt, bis Stirnfläche und Innenwand miteinander fluchten. Für jedes Ersetzen von Dichtscheiben muss der Aufnehmer zuerst aus der Radialbohrung herausgeschraubt und dann wieder hineingeschraubt werden, was zeitaufwendig ist.

Aufgabe der vorliegenden Erfindung ist es, das aus CH576133A5 bekannte Verfahren zum Bestimmen einer Einbautiefe eines Aufnehmers in einem Prüfkörper zu vereinfachen.

### Darstellung der Erfindung

Diese Aufgabe wird durch die Merkmale des unabhängigen Anspruchs gelöst.

Die Erfindung betrifft ein Verfahren zum Bestimmen einer Einbautiefe eines Aufnehmers in einem Prüfkörper; welcher Prüfkörper eine Längsbohrung aufweist, welche Längsbohrung in einer radialer Richtung von einer Innenwand begrenzt ist; in welcher Längsbohrung eine physikalische Messgrösse herrscht; welcher Prüfkörper eine Radialbohrung aufweist, welche Radialbohrung bis zur Längsbohrung reicht; welcher Aufnehmer in die Radialbohrung einbaubar ist; welche physikalische Messgrösse vom eingebauten Aufnehmer messbar ist; welche Radialbohrung eine Radialschulter aufweist; und welcher Aufnehmer eine Dichtschulter aufweist, mit welcher Dichtschulter der eingebaute Aufnehmer direkt oder indirekt auf der Radialschulter aufliegt; wobei eine Kerntiefe ermittelt wird, welche Kerntiefe eine kürzeste radiale Entfernung zwischen der Radialschulter und der Innenwand ist; wobei eine Fronttiefe ermittelt wird, welche Fronttiefe eine kürzeste radiale Entfernung zwischen der Dichtschulter und einer Stirnfläche des Aufnehmers ist; und wobei der Aufnehmer so in die Radialbohrung eingebaut wird, dass die Stirnfläche des eingebauten Aufnehmers in gleicher Einbautiefe mit der Innenwand liegt.

Die Patentanmelderin hat herausgefunden, dass zum Bestimmen der Einbautiefe eines Aufnehmers in einem Prüfkörper ein genaues Ermitteln einer Kerntiefe hilfreich ist. Die Kerntiefe wird vor dem Einbau des Aufnehmers im Prüfkörper bestimmt. Die Kerntiefe ist die kürzeste radiale Entfernung zwischen der Radialschulter der Radialbohrung im Prüfkörper und der Innenwand der Längsbohrung im Prüfkörper. Vorteilhafterweise wird die Kerntiefe mit einer Messuhr ermittelt, welche Messuhr einen Schaft und einen relativ zum Schaft längsverschiebbaren Messbolzen aufweist.

Auch wird vor dem Einbau des Aufnehmers im Prüfkörper eine Fronttiefe des Aufnehmers genau ermittelt. Die Fronttiefe ist eine kürzeste radiale Entfernung zwischen der Dichtschulter und der Stirnfläche des Aufnehmers. Vorteilhafterweise wird die Fronttiefe aus einem Datenblatt zum Aufnehmer ermittelt oder die Fronttiefe wird mit einer Schiebelehre ermittelt.

Erst jetzt wird der Aufnehmer in den Prüfkörper eingebaut, so dass die Stirnfläche des eingebauten Aufnehmers in gleicher Einbautiefe mit der Innenwand liegt. Vorteilhafterweise wird für einen direkt auf der Radialschulter aufliegenden Einbau des Aufnehmers, ein Aufnehmer verwendet, dessen Fronttiefe gleich der Kerntiefe ist. Vorteilhafterweise wird für einen indirekt über eine Dichtscheibe auf der Radialschulter aufliegenden Einbau des Aufnehmers, eine Differenz von Kerntiefe und Fronttiefe gebildet; und es wird mindestens eine Dichtscheibe mit einer Höhe der gebildeten Differenz zwischen Radialschulter und Dichtschulter eingelegt.

Vorteilhafterweise wird mit der erfindungsgemäss bestimmten Einbautiefe ein Aufnehmer mit einem Rückversatz von weniger als der Hälfte des nach CIP maximal zulässigen Rückversatzes von 0.25mm im Prüfkörper eingebaut.

### Kurze Beschreibung der Zeichnungen

Im Folgenden wird die Erfindung in zwei Ausführungsformen beispielhaft unter Beizug der Figuren näher erklärt. Es zeigen
- Fig. 1: einen Längsschnitt durch einen Teil eines Prüfkörpers mit einer Längsbohrung und einer Radialbohrung;
- Fig. 2: einen Längsschnitt durch einen Teil eines Aufnehmers;
- Fig. 3: einen Längsschnitt des Prüfkörpers nach Fig. 1 mit einer Messuhr in der Radialbohrung;
- Fig. 4: einen vergrösserten Ausschnitt des Prüfkörpers mit der Messuhr in der Radialbohrung nach Fig. 3;
- Fig. 5: einen Längsschnitt des Prüfkörpers nach Fig. 1 mit dem Aufnehmer nach Fig. 2 in der Radialbohrung;
- Fig. 6: einen Querschnitt des Prüfkörpers nach Fig. 1 mit dem Aufnehmer nach Fig. 2 in der Radialbohrung;
- Fig. 7: einen vergrösserten Ausschnitt einer ersten Ausführungsform des Prüfkörpers nach Fig. 5 mit einem Aufnehmer nach Fig. 2, welcher Aufnehmer direkt auf einer Dichtschulter aufliegt;
- Fig. 8: einen vergrösserten Ausschnitt einer ersten Ausführungsform des Prüfkörpers nach Fig. 6 mit einem Aufnehmer nach Fig. 2, welcher Aufnehmer direkt auf einer Dichtschulter aufliegt;
- Fig. 9: einen vergrösserten Ausschnitt einer zweiten Ausführungsform des Prüfkörpers nach Fig. 5 mit einem Aufnehmer nach Fig. 2, welcher Aufnehmer indirekt über eine Dichtscheibe auf einer Dichtschulter aufliegt; und
- Fig. 10: einen vergrösserten Ausschnitt einer zweiten Ausführungsform des Prüfkörpers nach Fig. 6 mit einem Aufnehmer nach Fig. 2, welcher Aufnehmer indirekt über eine Dichtscheibe auf einer Dichtschulter aufliegt.

### Wege zur Ausführung der Erfindung

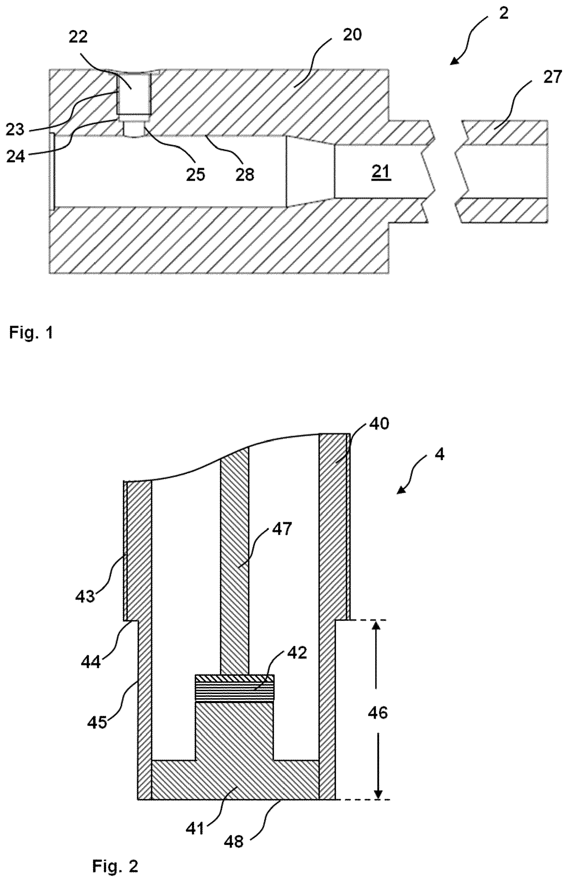

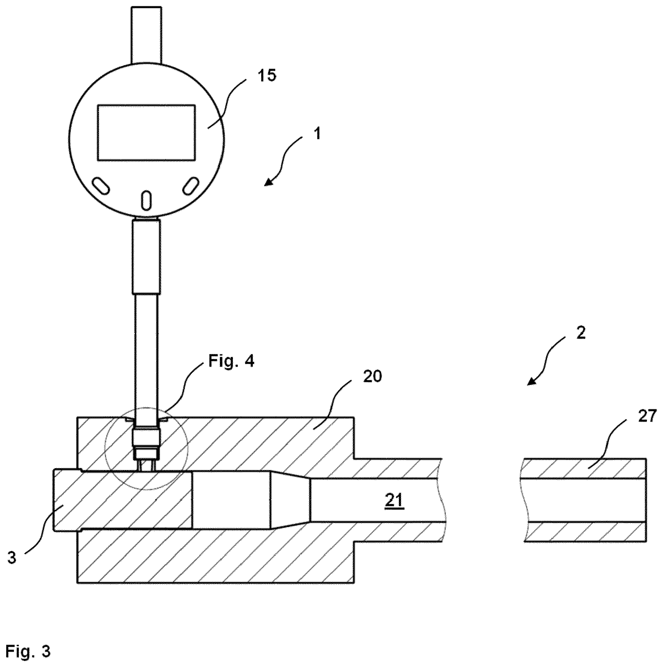

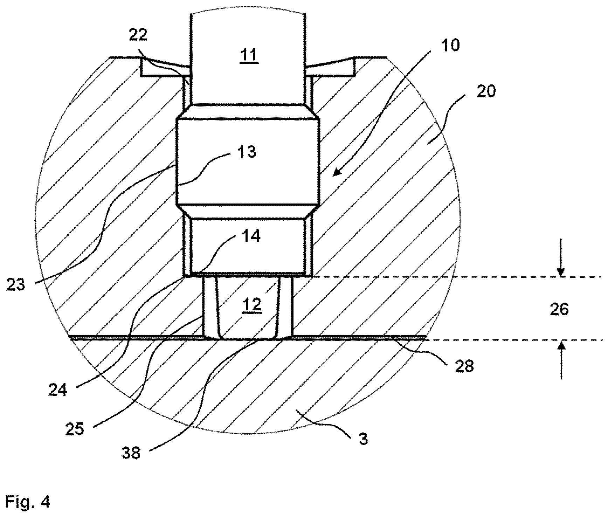

In den beispielhaften Ausführungsformen der Erfindung ist der Prüfkörper 2 ein Prüfkörper zum Verschiessen von Munition 3. Fig. 1 zeigt einen Längsschnitt durch einen Teil eines Laufes 20 des Prüfkörpers 2. Weitere Teile des Prüfkörpers 2 wie eine Basküle, ein Munitionslager, usw. sind figürlich nicht dargestellt. Die Munition 3 kann eine Patrone sein, wie in Fig. 3 und 4 dargestellt. Die Munition 3 wird in den Lauf 20 geladen und wird im Lauf 20 verschossen. Die Munition 3 ist Industriemunition, welche industriel hergestellt wird. Eine Herstelltoleranz eines Radialdurchmessers der Industriemunition beträgt +/-0.1mm. Bei Kenntnis der vorliegenden Erfindung kann der Fachmann auch einen anderen Prüfkörper wie ein Verbrennungsmotor, eine Turbine, usw. verwenden.

Der Lauf 20 ist aus beständigem Material wie Stahl, der mit Nickel, Chrom, usw. legiert ist. Der Lauf 20 weist einen Mantel und eine Längsbohrung 21 auf. Ein Querschnitt und eine Innenwand 28 der Längsbohrung 21 sind einsatzzweckspezifisch. Fig. 1 zeigt einen Prüfkörper 2 in der Ausführungsform einer Flinte mit einer Längsbohrung 21 von kreisförmigem Querschnitt und glatter Innenwand 28. Zum Verschiessen von Schrotmunition ist der Querschnitt der Längsbohrung 21 im Bereich einer Mündung 27 des Laufes 20 der Flinte verengt, um eine Streuung der verschossenen Schrotmunition zu beeinflussen. Nach Fig. 1 beträgt der nichtverengte Querschnitt der Längsbohrung 21 beispielsweise 18.5mm und der verengte Querschnitt der Längsbohrung 21 beträgt beispielsweise 14.0mm. Eine Herstelltoleranz vom Querschnitt der Längsbohrung 21 beträgt +/-0.1mm.

In der Längsbohrung 21 herrscht eine physikalische Messgrösse. In den beispielhaften Ausführungsformen der Erfindung ist die physikalische Messgrösse ein Druck, der beim Verschiessen der Munition 3 in der Längsbohrung 21 auftritt. Zum Messen des Druckes ist ein Aufnehmer 4 in den Lauf 20 einbaubar. Bei Kenntnis der vorliegenden Erfindung kann der Fachmann mit einem geeigneten Aufnehmer auch eine andere physikalische Messgrösse wie eine Kraft, eine Temperatur, usw. messen.

Zum Einbau des Aufnehmers 4 ist im Mantel des Laufes 20 eine Radialbohrung 22 angebracht. Die Radialbohrung 22 durchdringt den Mantel des Laufes 20. Die Radialbohrung 22 steht senkrecht auf der Längsbohrung 21. Die Radialbohrung 22 reicht bis zur Längsbohrung 21, derart, dass die Innenwand 28 im Bereich der Radialbohrung 22 eine Öffnung aufweist. In einem von der Längsbohrung 21 abgewandten Bereich weist die Radialbohrung 22 ein Innengewinde 23 auf. Das Innengewinde 23 ist beispielsweise ein metrisches ISO-Gewinde wie M10x1.0, 3/8-24 UNF, usw. Das Innengewinde 23 reicht bis zu einer Radialschulter 24 der Radialbohrung 22. In einem der Längsbohrung 21 zugewandten Bereich weist die Radialbohrung 22 einen Kern 25 auf. Ein Querschnitt der Radialbohrung 22 im Bereich des Innengewindes 23 ist grösser als ein Querschnitt der Radialbohrung 22 im Bereich des Kerns 25. Beispielsweise beträgt der Querschnitt der Radialbohrung 22 im Bereich des M10x1.5 Innengewindes 23 10.0mm und der Querschnitt der Radialbohrung 22 im Bereich des M10x1.5 Kerns 25 beträgt 8.5mm. Der Kern 25 weist eine Kerntiefe 26 auf. Die Kerntiefe 26 ist die kürzeste radiale Entfernung zwischen Radialschulter 24 und Innenwand 28. Nach Fig. 2 beträgt die Kerntiefe 26 beispielsweise 5.7mm. Eine Herstelltoleranz der Kerntiefe 26 beträgt +/-0.1mm.

Fig. 2 und 5 bis 10 zeigen Teile des Aufnehmers 4 zum Messen des Druckes. Der Aufnehmer 4 weist ein Gehäuse 40 und ein Druckübertragungselement 41 auf. Gehäuse 40 und Druckübertragungselement 41 sind aus beständigem Material wie Stahl, der mit Nickel, Chrom, usw. legiert ist. Vorteilhafterweise sind Gehäuse 40 und Druckübertragungselement 41 zylinderförmig. Das Druckübertragungselement 41 weist eine Stirnfläche 48 auf. Im in der Radialbohrung 22 eingebauten Zustand reicht die Stirnfläche 48 bis zur Längsbohrung 21 und nimmt den zu messenden Druck auf.

Im Inneren des Gehäuses 40 ist mindestens ein piezoelektrisches Element 42 angeordnet und mit dem Druckübertragungselement 41 mechanisch verbunden. Das piezoelektrische Element 42 ist aus piezoelektrischem Kristallmaterial wie Quarz (SiO₂ Einkristall), Calcium-Gallo-Germanat (Ca₃Ga₂Ge₄O₁₄ oder CGG), Langasit (La₃Ga₅SiO₁₄ oder LGS), Turmalin, Galliumorthophosphat, usw.

Der zu messende Druck wird durch eine Aussenwand 38 der Munition 3 als Normalkraft auf das Druckübertragungselement 41 übertragen. Das Druckübertragungselement 41 überträgt und verteilt die Normalkraft gleichmässig auf das piezoelektrische Element 42. Unter der Wirkung der Normalkraft erzeugt das piezoelektrische Element 42 ein dem zu messenden Druck proportionales elektrisches Ausgangssignal. Das piezoelektrische Aufnehmerelement 42 ist kristallographisch so orientiert geschnitten, dass es eine hohe Empfindlichkeit für die Normalkraft hat. Vorteilhafterweise ist das piezoelektrische Element 42 so orientiert, dass auf den gleichen Oberflächen auf denen die Normalkraft einwirkt, auch das elektrische Ausgangssignal erzeugt wird. Eine Abnehmerelektrode 47 ist auf der vom Druckübertragungselement 41 abgewandten Seite des piezoelektrischen Elementes 42 direkt hinter dem piezoelektrischen Element 42 angeordnet. Die Abnehmerelektrode 47 ist aus elektrisch leitfähigem Material wie Kupfer, Kupferlegierungen, usw. Die Abnehmerelektrode 47 greift das erzeugte elektrische Ausgangssignal ab. Das Ausgangssignal kann signalverarbeitet werden. Ein zeitlicher Verlauf des signalverarbeiteten Ausgangssignals kann dargestellt werden.

In einem vom Druckübertragungselement 41 abgewandten Bereich weist das Gehäuse 40 ein Aussengewinde 43 auf. Das Aussengewinde 43 reicht bis zu einer Dichtschulter 44 am Gehäuse 40. In einem dem Druckübertragungselement 41 zugewandten Bereich weist das Gehäuse 40 eine Front 45 auf. Ein Querschnitt des Gehäuses 40 im Bereich des Aussengewindes 43 ist grösser als ein Querschnitt des Gehäuses 42 im Bereich der Front 45. Die Front 45 weist eine Fronttiefe 46 auf. Die Fronttiefe 46 ist die kürzeste radiale Entfernung zwischen Dichtschulter 44 und Stirnwand 48.

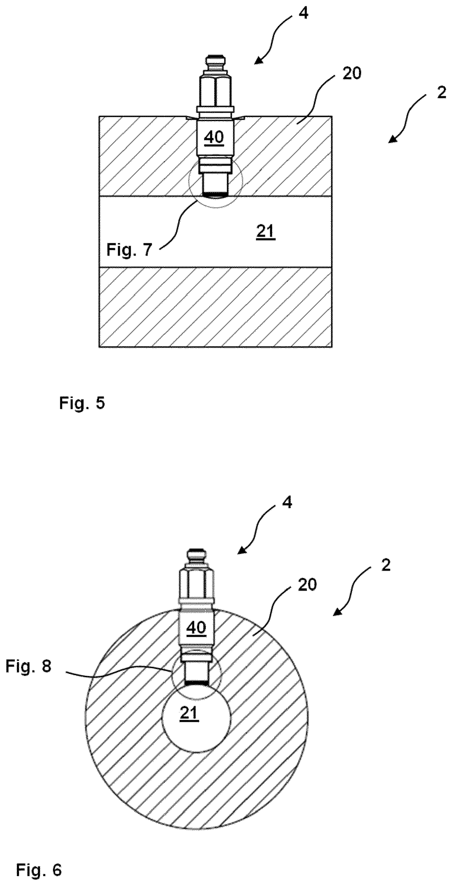

Das Aussengewinde 43 des Aufnehmers 4 und das Innengewinde 23 sind passend zueinander, beispielsweise sind sie ein metrisches ISO-Gewinde M10x1.5, so dass der Aufnehmer 4 mit dem Aussengewinde 43 in das Innengewinde 23 der Radialbohrung 22 geschraubt wird. Fig. 5 bis 10 zeigen den in die Radialbohrung 22 geschraubten Aufnehmer 4. Bei Kenntnis der vorliegenden Erfindung kann der Fachmann den Aufnehmer auch auf andere Art und Weise im Prüfkörper einbauen. So kann der Fachmann den Aufnehmer an Stelle einer Schraubverbindung eine formschlüssige Verbindung wie eine Stiftverbindung, eine Schnappverbindung, usw. oder eine kraftschlüssige Verbindung wie eine Klemmung, ein Presssitz, usw. im Prüfkörper einbauen.

Fig. 3 und 4 zeigen eine Messuhr 1 in der Radialbohrung 22. Die Messuhr 1 weist eine Eingabe-/Ausgabeeinheit 15 auf. Die Messuhr 1 weist einen Schaft 11 und einen relativ zum Schaft 11 längsverschiebbaren Messbolzen 12 auf. Der Messbolzen 12 ist in einer Buchse im Schaft 11 geführt. Der Messbolzen 12 ragt bereichsweise aus dem Schaft 11 heraus. Die Messuhr 1 weist auch einen Wegaufnehmer auf, welcher Wegaufnehmer einen Verschiebeweg des Messbolzens 12 berührungslos kapazitiv erfasst. Der Wegaufnehmer ist figürlich nicht dargestellt. Die Messuhr 1 misst den Verschiebeweg des Messbolzens 12 mit einer Genauigkeit von 0.01mm. Die Messuhr 1 wird genullt, indem Messbolzen 12 und Dichtschulter 14 auf gleiche Höhe gebracht werden. Dazu wird an der Eingabe-/Ausgabeeinheit 15 ein Nullschalter betätigt, eine digitale Anzeige zeigt "0.00" an. Die Einheit der digitalen Anzeige lautet mm.
An der Messuhr 1 ist ein Adapter 10 anbringbar. Der Adapter 10 weist ein Aussengewinde 13 und eine Dichtschulter 14 auf. Der Adapter 10 ist aus beständigem Material wie Stahl, der mit Nickel, Chrom, usw. legiert ist. Der Adapter 10 ist hohlzylinderförmig und ist reversibel am Schaft 11 anbringbar, beispielsweise in dem der Adapter 10 über den Schaft 11 geschoben und an einer Befestigungsposition am Schaft 11 befestigt wird. Der Adapter 10 ist per Formschluss wie eine Stiftverbindung, eine Schnappverbindung, usw., per Kraftschluss wie eine Klemmung, ein Presssitz, usw. und auch per Form- und Kraftschluss wie eine Schraubverbindung, usw. am Schaft 11 befestigt. Über mehrere solcher Adapter 10 lässt sich die Messuhr 1 in die verschiedensten Prüfkörpern 2 einbauen. Verschiedene Adapter 10 sind für einen Einbau der Messuhr 1 an verschiedenste Prüfkörper 2 angepasst. Die verschiedenen Adapter 10 unterscheiden sich in der Art der Schraubverbindung mit dem Prüfkörper 2. Die verschiedenen Adapter 4 sind aber auch über eine formschlüssige Verbindung wie eine Stiftverbindung, eine Schnappverbindung, usw. oder über eine kraftschlüssige Verbindung wie eine Klemmung, ein Presssitz, usw. im Prüfkörper einbaubar.

Die Messuhr 1 wird über das Aussengewinde 13 des Adapters 10 in das Innengewinde 23 der Radialbohrung 22 geschraubt. Aussengewinde 43 und Innengewinde 23 sind passend zueinander, beispielsweise sind sie ein metrisches ISO-Gewinde M10x1.5. Die Messuhr 1 wird so weit in die Radialbohrung 22 geschraubt, bis dass die Dichtschulter 14 des Adapters 10 auf der Radialschulter 24 der Radialbohrung 22 aufliegt.

Nun wird eine Munition 3 in der Längsbohrung 21 positioniert. Nach Fig. 3 und 4 ist die Munition 3 eine Patrone mit einer Aussenwand 38, welche in der Längsbohrung 21 unter der Öffnung für die Radialbohrung 22 in der Innenwand 28 positioniert wird. Die Munition 3 versperrt mit der Aussenwand 38 die Öffnung für die Radialbohrung 22 in der Innenwand 28. Aussenwand 38 und Innenwand 28 liegen innerhalb der Genauigkeit der Messuhr 1 in ein und derselben Ebene.

Nachdem die Munition 3 unter der Öffnung für die Radialbohrung 22 in der Innenwand 28 positioniert ist, wird der Messbolzen 12 längsverschoben, bis dass der Messbolzen 12 auf der Aussenwand 38 aufliegt. In dieser Auflageposition entspricht der Verschiebeweg des Messbolzens 12 der Kerntiefe 26. Beispielsweise zeigt die digitale Anzeige "5.73" an. Die so mit der Messuhr 1 ermittelte Kerntiefe 26 ist mit 5.73mm also 0.03mm grösser als die mit einer Herstelltoleranz +/-0.1mm hergestellte Kerntiefe 26. Vorzugsweise wird für das Ermitteln der Kerntiefe 26 als Munition 3 eine spezielle Munition verwendet, welche spezielle Munition einen speziellen Radialdurchmesser aufweist, welcher spezielle Radialdurchmesser um maximal 1.0mm grösser ist als der Radialdurchmesser der Industriemunition, welche Industriemunition im Prüfkörper 2 verschossen wird. Die spezielle Munition wird nicht verschossen. Der spezielle Radialdurchmesser trägt jedoch einer Aufweitung des Radialdurchmessers beim Verschiessen der Industriemunition Rechnung, so dass der spezielle Radialdurchmesser dem aufgeweiteten Radialdurchmesser entspricht.

Unabhängig davon wird die Fronttiefe 46 ermittelt. Im einfachsten Fall nennt der Hersteller des Aufnehmers 4 die Fronttiefe 46 in einem Datenblatt zum Aufnehmer 4. So kann der Hersteller des Aufnehmers 4 eine Fronttiefe 46 mit der Herstelltoleranz von +/-0.01mm nennen. Alternativ kann der Aufnehmer 4 auch mit einer Schiebelehre ermittelt werden. Die Fronttiefe 46 kann mit der Schiebelehre von aussen einfach und rasch ermittelt werden. Die Schiebelehre ist figürlich nicht abgebildet. Die Schiebelehre ermittelt die Fronttiefe 46 mit einer Genauigkeit von 0.02mm.

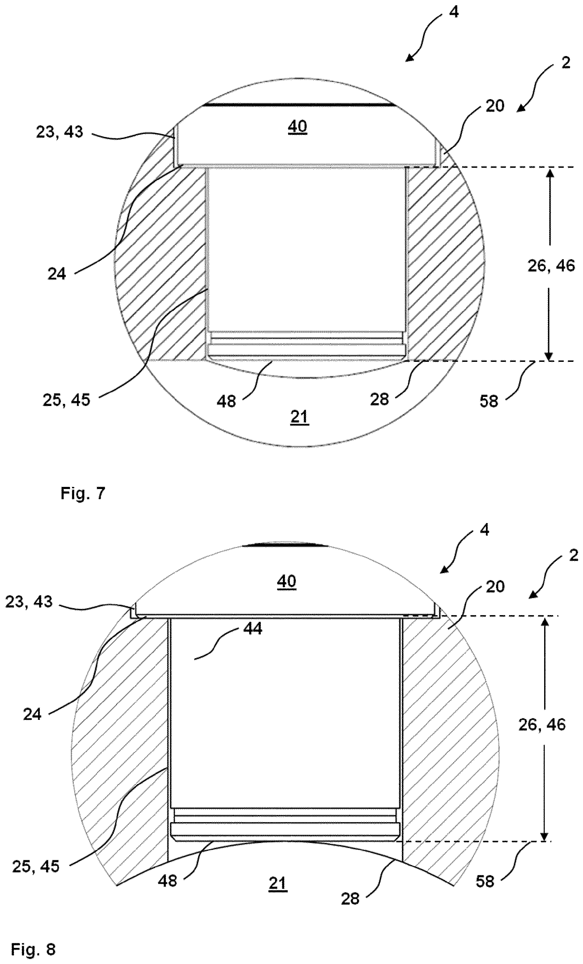

Für einen direkt auf der Radialschulter 24 aufliegenden Einbau des Aufnehmers 4 in einer ersten Ausführungsform nach Fig. 7 und 8, wird ein Aufnehmer 4 verwendet, dessen Fronttiefe 46 gleich der Kerntiefe 26 ist. Beispielsweise werden die Fronttiefen 46 von drei Aufnehmern 4 ermittelt. Für die beispielhaft mit der Messuhr ermittelte Kerntiefe 26 von 5.73mm wird derjenige Aufnehmer 4 verwendet, dessen Fronttiefe 46 eine kleinste Abweichung zur ermittelten Kerntiefe 26 aufweist. Falls diese kleinste Abweichung grösser als ein nach CIP maximal zulässige Rückversatz von 0.25mm ist, wird die Fronttiefe 46 verändert. Beispielsweise weisen die drei Aufnehmer 4 Fronttiefen 46 von 6.00mm, 6.05mm und 6.10mm auf. Nun wird derjenige Aufnehmer mit der Fronttiefe 46 von 6.00mm verwendet, welche Fronttiefe 46 die kleinste Abweichung zur ermittelten Kerntiefe 26 aufweist. Da diese kleinste Abweichung 0,27mm beträgt, und somit grösser als der nach CIP maximal zulässige Rückversatz von 0.25mm ist, wird diese Fronttiefe 46 verändert. Beispielsweise wird diese Fronttiefe 46 durch mechanisches Abtragen von 0.15mm vom Druckübertragungselement 31 verändert, so dass die veränderte Fronttiefe 5.85mm beträgt und die kleinste Abweichung dieser veränderten Fronttiefe 46 0.12mm beträgt. Das mechanische Abtragen erfolgt durch Fräsen, Schleifen, usw. Die Abtragtolleranz beim mechanischen Abtragen beträgt +/-0.01mm. Dieser Aufnehmer 4 mit einer Fronttiefe 46 von 5.85mm wird so weit in die Radialbohrung 22 geschraubt, bis dass die Dichtschulter 44 auf der Dichtschulter 44 aufliegt. Der so eingebaute Aufnehmer 4 weist einen Rückversatz von 0.12mm auf, welcher Rückversatz weniger als die Hälfte des nach CIP maximal zulässige Rückversatz von 0.25mm beträgt.

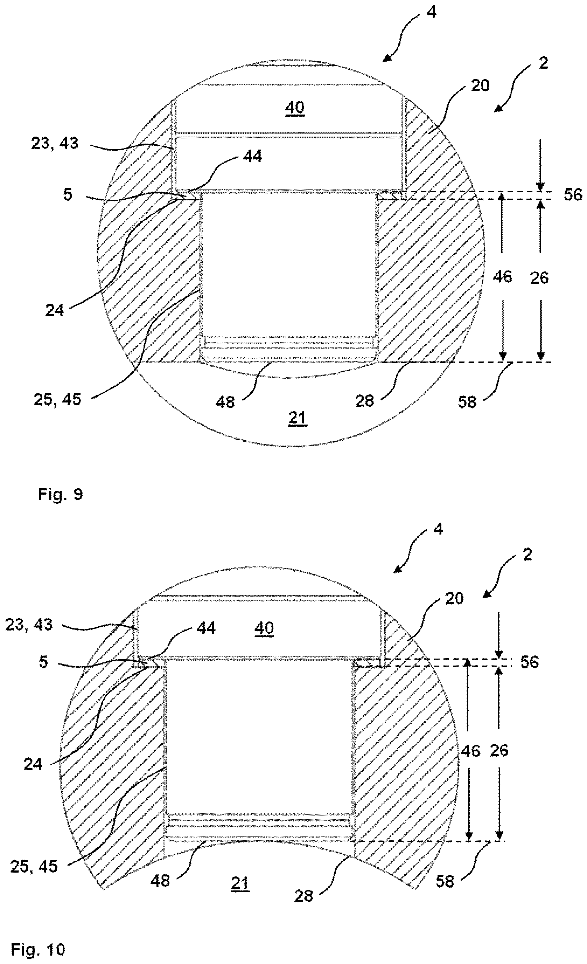

Für einen indirekt über eine Dichtscheibe 5 auf der Radialschulter 24 aufliegenden Einbau des Aufnehmers 4 in einer zweiten Ausführungsform nach Fig. 9 und 10, wird eine Differenz von Kerntiefe 26 und Fronttiefe 46 gebildet wird. Die Dichtscheibe 5 ist ein Hohlzylinder mit einer Höhe 56. Die Höhe 56 beträgt zwischen 1.0mm und 20.0mm. Eine Höhentoleranz der Dichtscheibe 5 beträgt +/-0.01mm. Die Dichtscheibe 5 ist aus beständigem Material wie Stahl, der mit Nickel, Chrom, usw. legiert ist. Die Dichtscheibe 5 dichtet den eingebauten Aufnehmer 4 ab. Für die beispielhaft mit der Messuhr ermittelte Kerntiefe 26 von 5.73mm und die beispielhaft vom Hersteller genannte Fronttiefe 26 von 6.10mm beträgt die Differenz 0.37mm mit einer Genauigkeit von 0.01mm. Diese Differenz gibt die Höhe 56 der zu verwendenden Dichtscheibe 5 an, so dass die Stirnfläche 48 des eingebauten Aufnehmers 4 in gleicher Einbautiefe 58 mit der Innenwand 28 liegt. Die so gebildete Differenz gibt die Höhe 56 mit einer Genauigkeit von 0.01mm an.

Somit kann aus einem Vorrat von mehreren unterschiedlich hohen Dichtscheiben 5 eine Dichtscheibe 5 oder ein Paket von mehreren übereinander gelegten Dichtscheiben 5 mit der benötigten Höhe 56 gezielt ausgewählt werden. Diese gezielte Auswahl von mindestens einer Dichtscheibe 5 mit der benötigten Höhe 56 erfolgt durch Ermitteln der Höhen 56 der unterschiedlich hohen Dichtscheiben 5. Beispielsweise werden die Höhen 56 von zehn unterschiedlich hohen Dichtscheiben 5 mit einer Schiebelehre ermittelt. Die Höhen 56 lassen sich mit der Schiebelehre von aussen einfach und rasch ermitteln. Die Schiebelehre ist figürlich nicht abgebildet. Die Schiebelehre ermittelt die Höhen 56 mit einer Genauigkeit von 0.02mm. Nun wird diejenige Dichtscheibe 5 mit einer Höhe 56 oder dasjenige Paket von übereinander gelegten Dichtscheiben 5 mit einer Höhe 56 verwendet, welche Höhe 56 eine kleinste Abweichung zur gebildeten Differenz aufweist. Beispielsweise wird ein Paket von zwei übereinander gelegten Dichtscheiben 5 mit einer Höhe von 0.42mm ausgewählt. Diese so gezielt ausgewählten Dichtscheiben 5 werden zwischen Radialschulter 24 und Dichtschulter 44 eingelegt. Der Aufnehmer 4 wird so weit in die Radialbohrung 22 geschraubt, bis dass die Dichtschulter 44 auf einer der eingelegten Dichtscheiben 5 aufliegt. Der so eingebaute Aufnehmer 4 weist einen Rückversatz von 5.73mm + 0.42mm - 6.10mm = 0.05mm auf, welcher Rückversatz kleiner als der nach CIP maximal zulässige Rückversatz von 0.25mm ist.

### Bezugszeichenliste

- 1: Messuhr
- 2: Prüfkörper
- 3: Munition
- 4: Aufnehmer
- 5: Dichtscheibe
- 10: Adapter
- 11: Schaft
- 12: Messbolzen
- 13: Aussengewinde
- 14: Dichtschulter
- 15: Eingabe-/Ausgabeeinheit
- 20: Lauf
- 21: Längsbohrung
- 22: Radialbohrung
- 23: Innengewinde
- 24: Radialschulter
- 25: Kern
- 26: Kerntiefe
- 27: Mündung
- 28: Innenwand
- 38: Aussenwand
- 41: Druckübertragungselement
- 42: piezoelektrisches Element
- 43: Aussengewinde
- 44: Dichtschulter
- 45: Front
- 46: Fronttiefe
- 47: Abgreifelektrode
- 48: Stirnfläche
- 56: Höhe
- 58: Einbautiefe

## Patentansprüche

1. Verfahren zum Bestimmen einer Einbautiefe (58) eines Aufnehmers (4) in einem Prüfkörper (2); welcher Prüfkörper (2) eine Längsbohrung (21) aufweist, welche Längsbohrung (21) in einer radialer Richtung von einer Innenwand (28) begrenzt ist; in welcher Längsbohrung (21) eine physikalische Messgrösse herrscht; welcher Prüfkörper (2) eine Radialbohrung (22) aufweist, welche Radialbohrung (22) bis zur Längsbohrung (21) reicht; welcher Aufnehmer (4) in die Radialbohrung (22) einbaubar ist; welche physikalische Messgrösse vom eingebauten Aufnehmer (4) messbar ist; welche Radialbohrung (22) eine Radialschulter (24) aufweist; und welcher Aufnehmer (4) eine Dichtschulter (44) aufweist, mit welcher Dichtschulter (44) der eingebaute Aufnehmer (4) direkt oder indirekt auf der Radialschulter (24) aufliegt; **dadurch gekennzeichnet, dass** eine Kerntiefe (26) ermittelt wird, welche Kerntiefe (26) eine kürzeste radiale Entfernung zwischen der Radialschulter (24) und der Innenwand (28) ist; dass eine Fronttiefe (46) ermittelt wird, welche Fronttiefe (46) eine kürzeste radiale Entfernung zwischen der Dichtschulter (44) und einer Stirnfläche (48) des Aufnehmers (4) ist; und dass der Aufnehmer (4) so in die Radialbohrung (22) eingebaut wird, dass die Stirnfläche (48) des eingebauten Aufnehmers (4) in gleicher Einbautiefe (58) mit der Innenwand (28) liegt.

2. Verfahren nach Anspruch 1, **dadurch gekennzeichnet, dass** für einen direkt auf der Radialschulter (24) aufliegenden Einbau des Aufnehmers (4), ein Aufnehmer (4) verwendet, dessen Fronttiefe (46) gleich der Kerntiefe (26) ist.

3. Verfahren nach Anspruch 1, **dadurch gekennzeichnet, dass** für einen indirekt über eine Dichtscheibe (5) auf der Radialschulter (24) aufliegenden Einbau des Aufnehmers (4), eine Differenz von Kerntiefe (26) und Fronttiefe (46) gebildet wird; und dass mindestens eine Dichtscheibe (5) mit einer Höhe (56) der gebildeten Differenz zwischen Radialschulter (24) und Dichtschulter (44) eingelegt wird.

4. Verfahren nach Anspruch 3, **dadurch gekennzeichnet, dass** Höhen (56) von mehreren unterschiedlich hohen Dichtscheiben (5) ermittelt werden; und dass diejenige Dichtscheibe (5) verwendet wird, deren Höhe (56) eine kleinste Abweichung zur gebildeten Differenz aufweist; oder dass ein Paket von mehreren übereinander gelegten Dichtscheiben (5) gebildet wird, dessen Höhe (56) eine kleinste Abweichung zur gebildeten Differenz aufweist.

5. Verfahren nach Anspruch 4, **dadurch gekennzeichnet, dass** die Höhen (56) mit einer Schiebelehre ermittelt werden.

6. Verfahren nach einem der Ansprüche 1 bis 5, **dadurch gekennzeichnet, dass** ein Prüfkörper (2) zum Verschiessen von Munition (3) verwendet wird; und dass als physikalische Messgrösse ein Druck, welcher beim Verschiessen von Munition (3) in der Längsbohrung (21) auftritt, gemessen wird.

7. Verfahren nach Anspruch 6, **dadurch gekennzeichnet, dass** mit der bestimmten Einbautiefe (58) ein Aufnehmer (4) mit einem Rückversatz von weniger als der Hälfte des nach CIP maximal zulässigen Rückversatzes von 0.25mm eingebaut wird.

8. Verfahren nach einem der Ansprüche 6 oder 7, **dadurch gekennzeichnet, dass** eine Radialbohrung (22) mit einem Innengewinde (23) verwendet wird; und dass ein Aufnehmer (4) mit einem Gehäuse (40) verwendet wird, welches Gehäuse (40) ein Aussengewinde (43) aufweist, welches Innengewinde (23) und welches Aussengewinde (43) des Aufnehmers (4) passend zueinander sind.

9. Verfahren nach Anspruch 8, **dadurch gekennzeichnet, dass** die Kerntiefe (26) mit einer Messuhr (1) ermittelt wird, welche Messuhr (1) einen Schaft (11) und einen relativ zum Schaft (11) längsverschiebbaren Messbolzen (12) aufweist.

10. Verfahren nach Anspruch 9, **dadurch gekennzeichnet, dass** zum Ermitteln der Kerntiefe (26) an der Messuhr (1) ein Adapter (10) angebracht wird; und dass ein Adapter (10) mit einem Aussengewinde (13) verwendet wird, welches Aussengewinde (13) des Adapters (10) passend zum Innengewinde (23) ist.

11. Verfahren nach Anspruch 10, **dadurch gekennzeichnet, dass** zum Ermitteln der Kerntiefe (26) die Messuhr (1) über das Aussengewinde (13) des Adapters (10) in das Innengewinde (23) der Radialbohrung (22) geschraubt wird; dass ein Adapter (10) mit einer Dichtschulter (14) verwendet wird; und dass die Messuhr (1) so weit in die Radialbohrung (22) geschraubt, bis dass die Dichtschulter (14) des Adapters (10) auf der Radialschulter (24) der Radialbohrung (22) aufliegt.

12. Verfahren nach Anspruch 11, **dadurch gekennzeichnet, dass** zum Ermitteln der Kerntiefe (26) die in das Innengewinde (23) geschraubte Messuhr (1) genullt wird; und dass Munition (3) in der Längsbohrung (21) unter eine Öffnung für die Radialbohrung (22) in der Innenwand (28) positioniert wird.

13. Verfahren nach Anspruch 12, **dadurch gekennzeichnet, dass** als Munition 3 eine spezielle Munition verwendet wird, welche spezielle Munition einen speziellen Radialdurchmesser aufweist, welcher spezielle Radialdurchmesser um maximal 1.0mm grösser ist als ein Radialdurchmesser von Industriemunition, welche Industriemunition im Prüfkörper (2) verschossen wird.

14. Verfahren nach einem der Ansprüche 12 oder 13, **dadurch gekennzeichnet, dass** zum Ermitteln der Kerntiefe (26) der Messbolzen (12) der genullten Messuhr (1) längsverschoben wird, bis dass der Messbolzen (12) auf einer Aussenwand (38) der Munition (3) aufliegt; und dass ein Verschiebeweg des Messbolzens (12) der zu ermittelnden Kerntiefe (26) entspricht.

15. Verfahren nach einem der Ansprüche 1 bis 14, **dadurch gekennzeichnet, dass** die Fronttiefe (46) aus einem Datenblatt zum Aufnehmer (4) ermittelt wird; oder dass die Fronttiefe (46) mit einer Schiebelehre ermittelt wird.
